# FASCICULE DE BREVET EUROPEEN

(11) **EP 2 318 665 B1**
(45) Date de publication et mention de la délivrance du brevet: **16.08.2017**
(21) Numéro de dépôt: 09809325.5
(22) Date de dépôt: 24.08.2009
(51) Int. Cl.: F01D 9/04

(54) **TURBINE HAUTE-PRESSION AVEC DISTRIBUTEUR GLISSANT**
HOCHDRUCKTURBINE MIT EINEM RUTSCHENDEN STATOR
HIGH-PRESSURE TURBINE WITH A SLIDING STATOR

(30) Priorité: 26.08.2008 FR 0855733
(43) Date de publication de la demande: 11.05.2011
(73) Titulaire: Snecma, 75015 Paris (FR)
(72) Inventeur: DAKOWSKI, Mathieu, F-94880 Noiseau (FR); GENDRAUD, Alain, Dominique, F-77670 Vernou La Celle Sur Seine (FR)
(74) Mandataire: Ilgart, Jean-Christophe
(86) Numéro de dépôt international: PCT/EP2009/060853
(87) Numéro de publication internationale: WO 2010/023172

(56) Documents cités:
- EP-A- 0 526 058
- EP-A- 0 616 111
- GB-A- 1 089 660
- GB-A- 2 069 064
- US-A- 4 379 560
- US-A- 5 839 878
- US-A1- 2005 120 718

## Description

### DOMAINE TECHNIQUE

L'invention concerne le montage d'un distributeur d'une turbine.

Elle a pour application principale le montage d'un distributeur d'une turbine haute pression dans un moteur d'aéronef, tel qu'un turboréacteur.

### ART ANTÉRIEUR

Dans une turbine haute-pression de turboréacteur, le distributeur est à ce jour monté en étant accroché avec le bas de carter ou encore appelé « ligne de carter interne ». Par la suite, on désignera la ligne de carter interne comme étant, l'ensemble des éléments structurels supportés ou fixés directement au carter interne de turbine. De manière analogue, l'expression « la ligne de carter externe » sera utilisée pour désigner l'ensemble des éléments structurels supportés ou fixés directement au carter externe de turbine. Plusieurs solutions d'accrochage ont déjà été prévues. On peut distinguer essentiellement deux catégories : celle couramment utilisée nécessitant de la boulonnerie comme moyen d'accrochage à la ligne de carter interne, telle que celle décrite dans la demande de brevet EP 1 369 552 et, celle utilisant d'autres moyens d'accrochage tels que des pions.

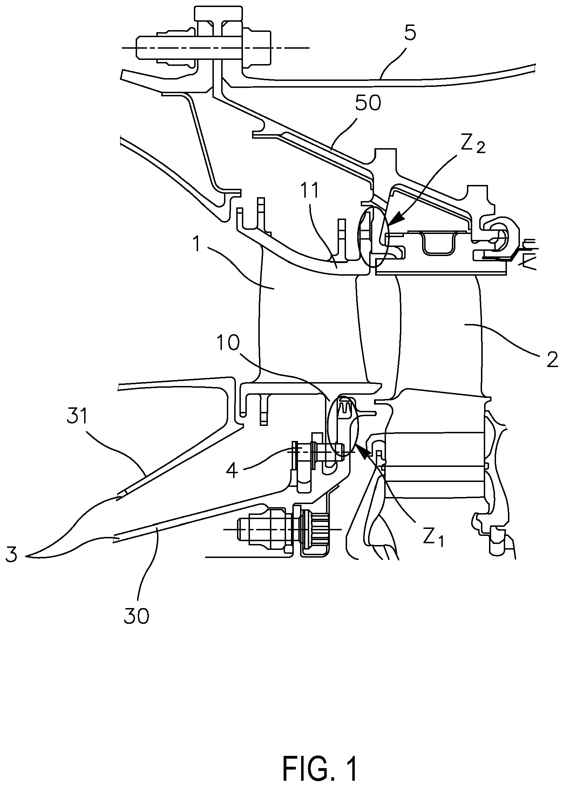

De telles solutions utilisant des pions sont par exemple décrites dans les demandes de brevet FR 2 189 632 et EP 0 513 956. Les documents GB069064A et US4379560 enseignent des agencements dans lesquels le bord interne du distributeur est lié mécaniquement à la ligne de carter interne de la turbomachine. Une solution avec pion actuellement mise en oeuvre par la demanderesse est montrée en figure 1.

Les désignations « amont » et « aval » sont relatives au sens du flux des gaz (de la gauche vers la droite sur la figure 1). De même, les désignations « externe », « extérieur » ; « interne » et « intérieur », « azimutal » sont relatives à la position des éléments par rapport à l'arbre de turbine (situé en bas sur la figure 1). Ainsi une position azimutale correspond à un angle azimutal par rapport à l'axe de rotation de l'arbre de turbine. On peut voir sur la figure 1 que le distributeur haute pression comporte un secteur définissant une rangée d'aubes fixes de redressement 1 placée en amont de la rangée d'aubes mobiles 2 de la turbine haute pression. Le bord intérieur 10 d'un secteur 1 est accroché à une pièce dite cône interne 30 de la ligne de carter interne 3 de la turbine par l'intermédiaire de pions 4. Cette ligne de carter interne 3 comprend notamment le carter diffuseur 31. Le bord extérieur 11 d'un secteur 1 est en appui axial contre une pièce annulaire 50 qui supporte les aubes mobiles 2 et qui est fixée directement au carter externe 5 de la turbine. Grâce à ce montage (appui axial du bord extérieur et accrochage par pion du bord intérieur), les aubes fixes 1 de distributeur peuvent, lors du fonctionnement de la turbine, basculer vers l'aval ou vers l'amont, de quelques degrés dans le but de récupérer les dilatations différentielles susceptibles de se produire entre le carter externe 5 et le carter interne 3. En outre, un tel montage permet de ne pas créer de surcontrainte et de garantir l'étanchéité. En fonctionnement de la turbine, sous la poussée des gaz, les aubes fixes 1 du distributeur sont en appui axial en deux zones symbolisées par les ellipses, une interne Z1 et une externe Z2 avec une répartition à peu prés équilibrée des efforts. En d'autres termes, la moitié des efforts de poussée des aubes fixes 1 de distributeur est appliquée en zone Z1, l'autre moitié en zone Z2.

Ainsi, quelle que soit la solution d'accrochage actuellement retenue pour le montage du distributeur de turbine, et en particulier celle avec pion utilisée par la demanderesse, il est nécessaire de prévoir un dimensionnement suffisant aussi bien de la ligne interne et que de la ligne externe de carter, pour pouvoir reprendre les efforts appliqués. Un tel dimensionnement s'accompagne nécessairement d'une masse donnée des lignes interne et externe de carter, en particulier du carter diffuseur, qui peut être importante.

Le but de l'invention est alors de proposer une solution qui permette de réduire la masse du carter diffuseur d'une turbine, en réduisant voire en supprimant les efforts appliqués sur la ligne interne de carter, lors du fonctionnement par la poussée des gaz.

Autrement dit, l'invention a pour objectif de réaliser un montage de distributeur de turbine permettant d'avoir la totalité des efforts de poussée appliqués sur la ligne externe de carter et de récupérer les dilatations différentielles axiales susceptibles de se produire entre la ligne de carter externe et la ligne de carter interne.

### EXPOSÉ DE L'INVENTION

A cet effet, l'invention concerne une turbine haute-pression d'une turbomachine selon la revendication 1. La liaison axiale glissante recherchée dans le cadre de l'invention est donc une liaison glissière au sens technologique du terme, qui autorise donc un degré de liberté selon l'axe du moteur autrement dit de la turbomachine pour le bord intérieur de l'aube.

L'arrêt axial de l'aube est réalisé par l'appui axial du bord extérieur de l'aube : le but recherché selon l'invention est donc atteint puisque, avec une telle liaison axiale glissante sur la ligne interne du carter, l'intégralité des efforts de poussée en fonctionnement de la turbomachine est de fait appliquée sur la ligne externe du carter.

En aucun cas, la liaison axiale glissante définie dans le cadre de l'invention n'est un montage autorisant un certain débattement axial, tel qu'un montage avec joint glissant. Un montage du bord intérieur de l'aube avec joint glissant n'entre pas dans le cadre de l'invention dans la mesure où il reprend nécessairement une partie des efforts de poussée de la turbomachine en fonctionnement.

La ligne de carter externe peut comprendre un support annulaire fixé au carter externe et, contre lequel le bord extérieur des aubes de distributeur est en appui.

Selon un mode de réalisation préféré,
- la ligne de carter interne comprend un élément annulaire avec une pluralité de rainures axiales,
- chaque bord intérieur de distributeur comprend des prolongements qui s'étendent vers la ligne de carter interne et qui sont conformés en crochets dont un groupe est orienté vers l'amont de la turbine et dont l'autre groupe est orienté vers l'aval de la turbine, les crochets étant emboités dans une paire de flasques fixés entre eux, la liaison glissante axiale étant réalisée par une pluralité de pions qui s'étendent radialement depuis au moins un des flasques vers l'intérieur de la turbine et qui sont logés individuellement dans une des rainures axiales de l'élément annulaire de la ligne de carter interne.

Selon le mode de réalisation préféré de l'invention, on réalise donc une couronne rigide de distributeur haute pression avec une paire de flasques annulaires fixés entre eux, l'ensemble étant en liaison glissante axiale avec la ligne de carter interne sous chambre. Cette liaison permet à l'ensemble d'être centré et libre axialement. L'arrêt axial (reprise d'effort) se réalise par l'appui axial du bord extérieur de l'aube, en particulier le rail externe aval, sur la ligne de carter externe.

Avantageusement, la paire de flasques est fixés entre eux par boulonnage.

Il est préférable de prévoir que la partie des prolongements amont de distributeur et les flasques amont sont conformés pour délimiter un passage suffisamment large pour alimenter en air le distributeur depuis l'amont.

De préférence, le flasque depuis lequel s'étendent vers l'intérieur la pluralité de pions est le flasque amont et dans lequel l'élément annulaire de la ligne de carter interne comprenant les rainures axiales dans lesquelles sont logées les pions est un élément qui est fixé au carter interne de turbine à l'amont du distributeur.

Lorsque le distributeur comprend au moins un secteur, un des flasques peut comprendre une pluralité de languettes axiales dont la largeur unitaire correspond à la distance séparant deux crochets d'un même secteur de distributeur orientés identiquement, les languettes de flasque et les crochets de secteur étant agencés entre eux pour constituer un système de tenon/mortaise permettant le positionnement azimutal des aubes de distributeur.

Le flasque comprenant les languettes est de préférence le flasque aval.

Chaque flasque est de préférence constitué par une seule pièce monobloc dont la forme annulaire a une longueur permettant le montage de toute la rangée annulaire d'aubes fixe.

L'invention concerne également un secteur de distributeur de turbine comprenant au moins une aube fixe de redressement, dont un bord latéral comprend des prolongements conformés en crochets divisés en deux groupes orientés différemment, l'un vers le bord d'attaque, l'autre vers le bord de fuite de l'aube.

Le secteur de distributeur de turbine peut comprendre une seule aube fixe de redressement.

Un prolongement d'un bord latéral peut comprendre avantageusement un groupe de deux crochets.

L'invention concerne également un moteur d'aéronef comprenant une turbine haute pression telle que décrite précédemment.

L'invention a pour principaux avantages :
- la suppression d'efforts sur la ligne de carter interne,
- la possible réduction des épaisseurs dimensionnant les lignes de carters interne, en particulier du carter diffuseur, et donc la possible réduction de masse.

### BRÈVE DESCRIPTION DES DESSINS

D'autres avantages et caractéristiques ressortiront mieux à la lecture de la description détaillée faite en référence aux figures suivantes parmi lesquelles :
- la figure 1 est une vue en coupe longitudinale partielle d'une turbine haute pression de turboréacteur selon l'état de l'art,
- la figure 2 est une vue en coupe longitudinale partielle d'un mode de réalisation de turbine haute pression selon l'invention,
- les figures 3A à 3E montrent les différentes étapes successives de montage des aubes de distributeur d'une turbine haute pression selon l'invention.

### EXPOSÉ DÉTAILLÉ DE MODES DE RÉALISATION PARTICULIERS

Une turbine haute pression selon l'état de l'art, tel que représentée sur la figure 1, a été décrite plus haut. L'inconvénient du montage d'une telle turbine est de définir une répartition des efforts de poussée des gaz égale entre la zone Z1 et la zone Z2. Il faut donc prévoir une ligne de carter interne 3, en particulier un carter de diffuseur 31, dimensionné suffisamment pour recevoir les efforts de poussée en zone Z1.

L'objectif de l'invention est de faire passer la totalité des efforts axiaux du distributeur HP 1 par la ligne externe de carter 5, soit dans la zone Z2.

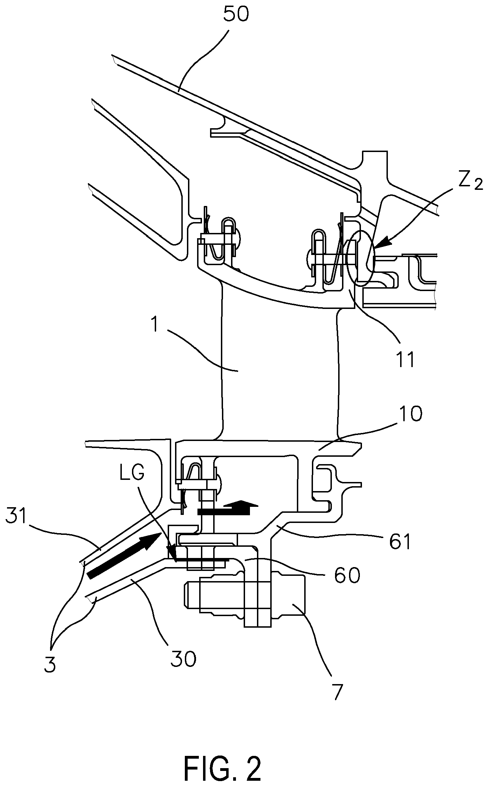

Pour ce faire, il est prévu de réaliser une liaison glissante axiale dans la zone Z1 (symbolisée par un trait horizontal noir LG sur la figure 2). Dans le mode de réalisation illustré, la liaison glissante axiale est réalisée grâce à une couronne annulaire rigide constituée par un flasque amont 60, un flasque aval 61 et au moins un secteur distributeur 1 crocheté aux flasques 60, 61. La couronne rigide ainsi constituée est verrouillée par un système d'une vis 7 et d'un écrou 8.

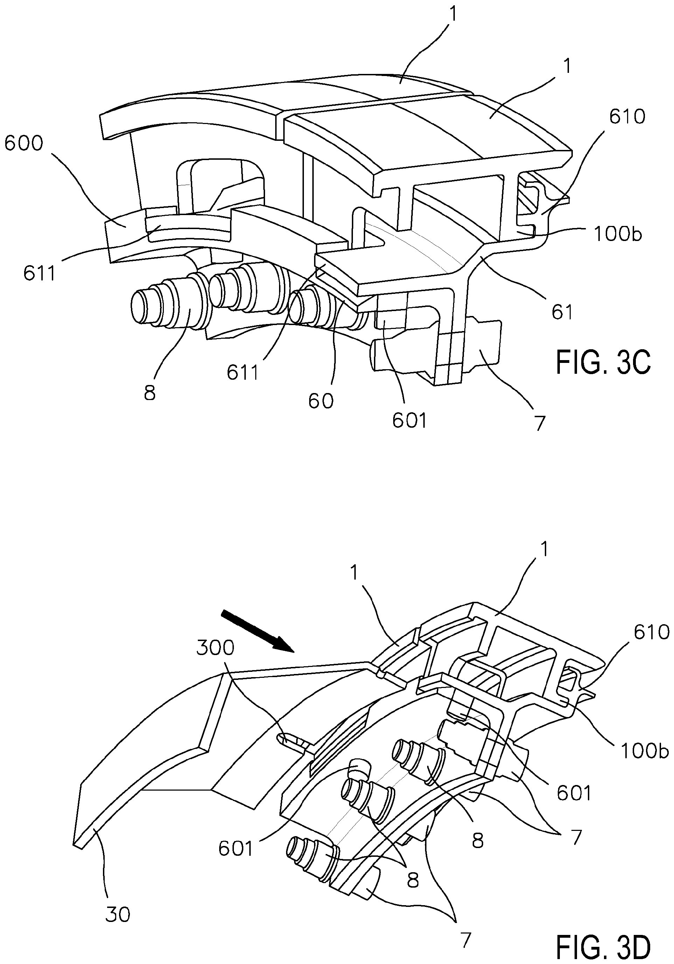

Plus précisément, la ligne de carter interne 3 comprend un cône interne 30 avec une pluralité de rainures axiales 300 (figure 3D). Chaque bord intérieur 10 du(es) secteur(s) de distributeur 1 comprend des prolongements 100 qui s'étendent vers la ligne de carter interne 3 et qui sont conformés en crochets dont un groupe 100a est orienté vers l'amont de la turbine et dont l'autre groupe 100b est orienté vers l'aval de la turbine. Les crochets 110a, 110b sont emboités dans des crochets de forme complémentaire 600, 610 de la paire de flasques 60, 61. Ces derniers 60, 61 sont fixés entre eux par le système de vis/écrou 7, 8.

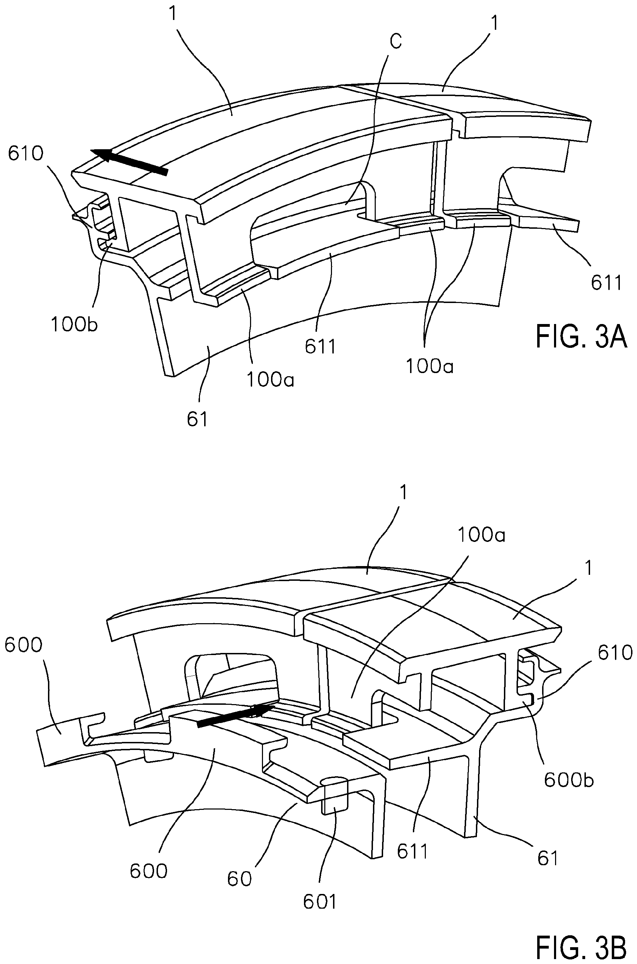

La liaison glissante axiale LG est réalisée par une pluralité de pions anti-rotation 601 qui s'étendent radialement depuis le flasque amont vers l'intérieur de la turbine (figure 2 et 3B) et qui sont logés individuellement dans une des rainures axiales 300 du cône interne 30 de la ligne de carter interne 3.

La couronne ainsi définie a une interface avec le cône interne 30 en continuité de la ligne de carter interne 3 sous chambre. Cette liaison a plusieurs fonctions: une fonction de centrage, une fonction glissante axiale et une fonction anti-rotation.

La fonction glissante de la liaison permet à la couronne rigide d'avoir une liberté suivant l'axe moteur. La couronne rigide sous l'effort des distributeurs HP vient uniquement en contact sur la ligne de carter externe 5 (au niveau du rail externe aval DHP 11 ; zone Z2) sans créer d'efforts axiaux sur le cône interne 30. En d'autres termes, les efforts sont transmis par le carter externe 5.

Les crochets 100a, 600 respectivement du bord intérieur amont 100a du secteur DHP et du flasque amont 60 sont conçus pour assurer les fonctions suivantes :
- alimentation en air des secteurs 1 de distributeur DHP par délimitation d'un passage d'air C prévu à cet effet (figures 3B, 3C),
- positionnement azimutal des secteurs 1 de distributeur DHP.

Plus précisément, pour réaliser le positionnement azimutal des secteurs 1, le flasque aval 61 comprend une pluralité de languettes axiales 611 dont la largeur unitaire correspond à la distance séparant deux crochets 100a d'un même secteur de distributeur orientés identiquement. Les languettes 611 de flasque 61 et les crochets de secteur 600 sont agencés entre eux pour constituer un système de tenon/mortaise permettant le positionnement azimutal du (es) secteur(s) de distributeur (figure 3A).

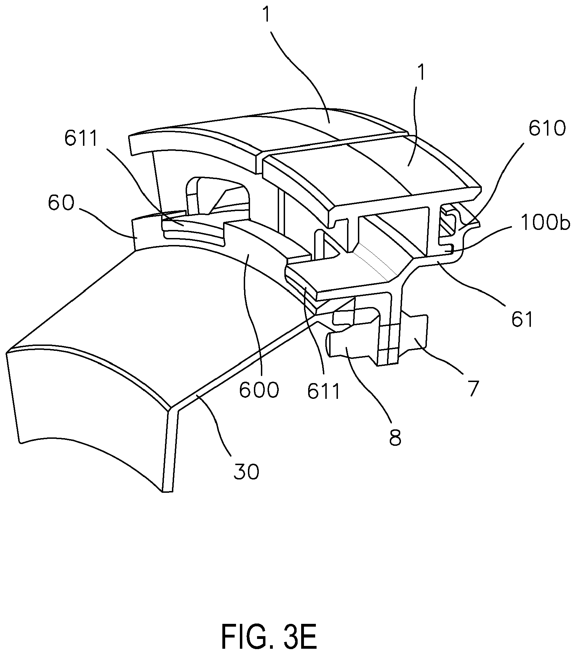

Pour réaliser le montage du distributeur, on procède ainsi comme suit (le sens des actions étant repéré par une flèche sur les figures 3A à 3D):
- mise en place des secteurs 1 de distributeur dans le flasque aval 61 par emboitement complémentaire des crochets 100b et des crochets 610 de flasque 61 aval (figure 3A),
- montage du flasque amont 60 dans le sous-ensemble constitué par le flasque aval 61 et les secteurs 1 par emboitement complémentaire des crochets 100a et des crochets 600 de flasque amont (figure 3B),
- vissage de la couronne rigide ainsi constituée par boulonnerie 7, 8, chaque boulon étant constitué d'une vis 7 et d'un boulon 8 (figure 3C),
- montage de la couronne vissée avec le cône interne 30 de la ligne de carter interne 3 par introduction de chacun des pions 601 dans une des rainures axiales 300 correspondantes ménagées dans le cône interne (figure 3D),
- fixation du cône interne 30 monté en liaison glissante axiale LG avec la couronne, avec la ligne de carter interne 3, afin de finaliser le montage (figure 3E).

Il va de soi que nombre d'améliorations ou variantes peuvent être prévues sans pour autant sortir du cadre de l'invention.

Par exemple, bien que dans le mode de réalisation illustré, chaque secteur 1 comprend une seule aube fixe, l'invention peut tout aussi être réalisée avec des secteurs comprenant individuellement plusieurs aubes fixes.

## Revendications

1. Turbine haute-pression d'une turbomachine, comprenant une ligne de carter externe (5, 50), une ligne de carter interne (3,30), au moins un distributeur (1) formé d'une rangée annulaire d'aubes fixes de redressement et une roue à aubes (2) montée rotative en aval du distributeur, ledit distributeur comportant un bord extérieur (11) et un bord intérieur (10), le bord extérieur (11) étant en appui axial contre la ligne de carter externe (5, 50) de la turbine et le bord intérieur (10) en liaison glissante axiale (LG) avec la ligne de carter interne (3, 30) de la turbine, **caractérisée en ce que** la liaison glissante axiale (LG) permet au bord intérieur (10) d'être libre selon l'axe moteur avec un arrêt axial réalisé par ledit appui axial du bord extérieur (11), pour que l'intégralité des efforts de poussée soit appliquée sur la ligne externe (5,50) de carter.

2. Turbine haute-pression selon la revendication 1, **caractérisée en ce que** la ligne de carter externe (5, 50) comprend un support annulaire (50) fixé au carter externe (5) et, contre lequel le bord extérieur (11) de distributeur est en appui.

3. Turbine haute-pression selon la revendication 1 ou 2, **caractérisée en ce que** :
- la ligne de carter interne (3, 30) comprend un élément annulaire (30) avec une pluralité de rainures axiales (300),
- chaque bord intérieur (10) de distributeur comprend des prolongements qui s'étendent vers la ligne de carter interne (3) et qui sont conformés en crochets dont un groupe (100a) est orienté vers l'amont de la turbine et dont l'autre groupe (100b) est orienté vers l'aval de la turbine, les crochets (100a, 100b) étant emboités dans une paire de flasques (60, 61) fixés entre eux, la liaison glissante axiale (LG) étant réalisée par une pluralité de pions (601) qui s'étendent radialement depuis au moins un des flasques (60) vers l'intérieur de la turbine et qui sont logés individuellement dans une des rainures axiales de l'élément annulaire de la ligne de carter interne.

4. Turbine haute-pression selon la revendication 3, **caractérisée en ce que** les flasques (60, 61) sont fixés entre eux par boulonnage (7, 8).

5. Turbine haute-pression selon l'une des revendications 3 ou 4, **caractérisée en ce que** la partie des prolongements amont (100a) de distributeur et le flasque amont (60) sont conformés pour délimiter un passage suffisamment large pour alimenter en air le distributeur depuis l'amont.

6. Turbine haute-pression selon l'une des revendications 3 à 5, **caractérisée en ce que** le flasque (60) depuis lequel s'étendent vers l'intérieur la pluralité de pions (601) est le flasque amont (60) et dans lequel l'élément annulaire (30) de la ligne de carter interne (3) comprenant les rainures axiales (300) dans lesquelles sont logées les pions est un élément qui est fixé au carter interne (3) de turbine à l'amont du distributeur.

7. Turbine haute-pression selon l'une des revendications 3 à 6, **caractérisée en ce que** le distributeur comprend au moins un secteur, **en ce qu'**un des flasques comprend une pluralité de languettes axiales (611) dont la largeur unitaire correspond à la distance séparant deux crochets (100a) d'un même secteur de distributeur orientés identiquement, les languettes de flasque (611) et les crochets (100a) de secteur étant agencés entre eux pour constituer un système de tenon/mortaise permettant le positionnement azimutal du (es) secteur (s) de distributeur.

8. Turbine haute-pression selon la revendication 7, **caractérisée en ce que** le flasque comprenant les languettes est le flasque aval (61).

9. Turbine haute-pression selon l'une des revendications 4 à 8, **caractérisée en ce que** chaque flasque (60, 61) est constitué par une seule pièce monobloc dont la forme annulaire a une longueur permettant le montage de toute la rangée annulaire d'aubes fixe (1).

10. Moteur d'aéronef comprenant une turbine haute pression selon l'une des revendications 1 à 9.

## Patentansprüche

1. Hochdruckturbine einer Turbomaschine, umfassend eine Außengehäuselinie (5, 50), eine Innengehäuselinie (3, 30), wenigstens ein Leitrad (1), das von einer ringförmigen Reihe von festen Leitschaufeln gebildet ist, und ein Schaufelrad (2), das stromab des Leitrades drehbar angebracht ist, wobei das Leitrad einen äußeren Rand (11) und einen inneren Rand (10) umfasst, wobei der äußere Rand (11) an der Außengehäuselinie (5, 50) der Turbine in axialer Anlage ist, und der innere Rand (10) mit der Innengehäuselinie (3, 30) der Turbine in axialer Gleitverbindung (LG) ist, **dadurch gekennzeichnet, dass** die axiale Gleitverbindung (LG) dem inneren Rand (10) ermöglicht, entlang der Antriebsachse frei zu sein, wobei durch die axiale Anlage des äußeren Randes (11) ein axialer Anschlag ausgebildet ist, damit die vollständigen Schubkräfte an die Außengehäuselinie (5, 50) angelegt werden.

2. Hochdruckturbine nach Anspruch 1, **dadurch gekennzeichnet, dass** die Außengehäuselinie (5, 50) einen ringförmigen Träger (50) umfasst, welcher an dem Außengehäuse (5) befestigt ist und an dem der äußere Leitradrand (11) in Anlage ist.

3. Hochdruckturbine nach Anspruch 1 oder 2, **dadurch gekennzeichnet, dass**:
- die Innengehäuselinie (3, 30) ein ringförmiges Element (30) mit einer Vielzahl von axialen Nuten (300) umfasst,
- jeder innere Leitradrand (10) Verlängerungen umfasst, die sich in Richtung der Innengehäuselinie (3) erstrecken und die als Haken ausgebildet sind, von welchen eine Gruppe (100a) in Richtung stromauf der Turbine gerichtet ist und die andere Gruppe (100b) in Richtung stromab der Turbine gerichtet ist, wobei die Haken (100a, 100b) in einem Paar von untereinander befestigten Flanschen (60, 61) eingebunden sind, wobei die axiale Gleitverbindung (LG) durch eine Vielzahl von Stiften (601), die sich radial von wenigstens einem der Flansche (60) aus zum Inneren der Turbine erstrecken und die einzeln in einer der axialen Nuten des ringförmigen Elements der Innengehäuselinie aufgenommen sind, hergestellt ist.

4. Hochdruckturbine nach Anspruch 3, **dadurch gekennzeichnet, dass** die Flansche (60, 61) untereinander durch Bolzenverbindung (7, 8) befestigt sind.

5. Hochdruckturbine nach einem der Ansprüche 3 oder 4, **dadurch gekennzeichnet, dass** der Teil der stromaufwärtigen Leitradverlängerungen (100a) und der stromaufwärtige Flansch (60) dazu ausgestaltet sind, einen hinreichend breiten Durchgang zu begrenzen, um das Leitrad von stromauf aus mit Luft zu beaufschlagen.

6. Hochdruckturbine nach einem der Ansprüche 3 bis 5, **dadurch gekennzeichnet, dass** der Flansch (60), von dem aus sich die Vielzahl von Stiften (601) nach innen erstreckt, der stromaufwärtige Flansch (60) ist, und wobei das ringförmige Element (30) der Innengehäuselinie (3) mit den axialen Nuten (300), in denen die Stifte aufgenommen sind, ein Element ist, das an dem Turbineninnengehäuse (3) stromauf des Leitrades befestigt ist.

7. Hochdruckturbine nach einem der Ansprüche 3 bis 6, **dadurch gekennzeichnet, dass** das Leitrad wenigstens einen Sektor umfasst, dass einer der Flansche eine Vielzahl von axialen Zungen (611) umfasst, deren einheitliche Breite dem Abstand, welcher zwei identisch ausgerichtete Haken (100a) eines gleichen Leitradsektors trennt, entspricht, wobei die Flanschzungen (611) und die Sektorhaken (100a) untereinander angeordnet sind, um ein Zapfen/Zapfenloch-System zu bilden, das die azimutale Positionierung des (der) Leitradsektors (-sektoren) ermöglicht.

8. Hochdruckturbine nach Anspruch 7, **dadurch gekennzeichnet, dass** der Flansch, welcher die Zungen umfasst, der stromabwärtige Flansch (61) ist.

9. Hochdruckturbine nach einem der Ansprüche 4 bis 8, **dadurch gekennzeichnet, dass** jeder Flansch (60, 61) durch ein einziges einstückiges Teil gebildet ist, dessen Ringform eine Länge aufweist, die die Montage der gesamten ringförmigen Reihe von Leitschaufeln (1) ermöglicht.

10. Luftfahrzeugtriebwerk, das eine Hochdruckturbine nach einem der Ansprüche 1 bis 9 umfasst.

## Claims

1. A high-pressure turbine of a turbomachine, comprising a line of an external casing (5, 50), a line of an internal casing (3, 30) at least one guide vane assembly (1) formed by an annular row of stationary flow-stabilizing vanes and a vaned rotor (2) rotatingly mounted downstream of the guide vane assembly, said guide vane assembly including an outer edge (11) and an inner edge (10), the outer edge (11) bearing axially against the line of the external casing (5, 50) of the turbine and the inner edge (10) in axial sliding connection (LG) with the line of the internal casing (3, 30) of the turbine, **characterized in that** the axial sliding connection allows the inner edge (10) to be free along the engine axis with an axial stop formed by the said axial bearing of the outer edge (11), such that all of the thrust forces be applied on the line of the external casing (5, 50).

2. The high-pressure turbine according to claim 1, **characterized in that** the line of the external casing (5, 50) comprises an annular support (50) fixed to the external casing (5) and against which the outer edge (11) of the guide vanes bears.

3. The high-pressure turbine according to claim 1 or 2, **characterized in that**:
- the line of the internal casing (3, 30) comprises an annular member (30) with a plurality of axial grooves (300),
- each inner guide vane edge (10) comprises extensions that extend towards the line of the internal casing (3) and that are configured in hooks, one group (100a) of which is oriented in the upstream direction of the turbine and the other group (100b) of which is oriented in the downstream direction of the turbine, the hooks (100a, 100b) being interlocked in a pair of flanges (60, 61) fixed relative to each other, the axial sliding connection (LG) being done by a plurality of pins (601) that extend radially from at least one of the flanges (60) towards the inside of the turbine and that are housed individually in one of the axial grooves of the annular member of the line of the internal casing.

4. The high-pressure turbine according to claim 3, **characterized in that** the pair flanges (60, 61) are fixed relative to each other by bolting (7, 8).

5. The high-pressure turbine according to one of claims 3 or 4, **characterized in that** the portion of the upstream guide vane extensions (100a) and the upstream flange (60) are configured to delimit a sufficiently wide passage to provide air to the guide vane assembly from upstream.

6. The high-pressure turbine according to one of claims 3 to 5, **characterized in that** the flange (60) from which the plurality of pins (601) extend inward is the upstream flange (60) and in which the annular member (30) of the line of the internal casing (3) comprising the axial grooves (300) in which the pins are housed is a member fixed to the internal turbine casing (3) upstream of the guide vane assembly.

7. The high-pressure turbine according to one of claims 3 to 6, **characterized in that** the guide vane assembly comprises at least one sector, **in that** one of the flanges comprises a plurality of axial tabs (611) whereof the individual width corresponds to the distance separating two hooks (100a) of a same guide vane assembly sector oriented identically, the flange tabs (611) and the sector hooks (100a) being arranged relative to each other to make up a mortise and tenon system allowing the azimuthal positioning of the guide vanes.

8. The high-pressure turbine according to claim 7, **characterized in that** the flange comprising the tabs is a downstream flange (61).

9. The high-pressure turbine according to one of claims 4 to 8, **characterized in that** each flange (60, 61) is made up of one single-piece part whereof the annular shape has a length allowing the assembly of the entire annular row of stationary vanes (1).

10. An aircraft engine comprising a high-pressure turbine according to one of claims 1 to 9.
